# EUROPEAN PATENT SPECIFICATION

(11) **EP 3 609 824 B1**
(45) Date of publication and mention of the grant of the patent: **30.10.2024**
(21) Application number: 18713022.4
(22) Date of filing: 22.03.2018
(51) Int. Cl.: B65G 67/60

(54) **DEVICE AND PROCESS FOR CONTINUOUS UNLOADING OF NON-COHERENT MATERIAL FOR SHIP HOLDS, BARGES, STORAGE CRATES OR THE LIKE**
VORRICHTUNG UND VERFAHREN ZUM KONTINUIERLICHEN ENTLADEN VON NICHT-KOHÄRENTEM MATERIAL FÜR SCHIFFSLADERÄUME, LASTKÄHNE, LAGERUNGSKISTEN ODER DERGLEICHEN
DISPOSITIF ET PROCÉDÉ DE DÉCHARGEMENT CONTINU DE MATÉRIAU NON COHÉRENT POUR DES CALES DE NAVIRES, BARGES, CAISSES DE STOCKAGE OU SIMILAIRES

(30) Priority: 10.04.2017 IT 201700039139
(43) Date of publication of application: 19.02.2020
(73) Proprietor: Tenova S.p.A., 20149 Milano (IT)
(72) Inventor: BONIFACIO, Filippo, 16014 Campomorone (GE) (IT); LEONI, Silvio, 20149 Milano (IT)
(74) Representative: PGA S.p.A., Milano, Succursale di Lugano
(86) International application number: PCT/IB2018/051936
(87) International publication number: WO 2018/189605

(56) References cited:
- EP-A1- 0 209 212
- WO-A2-2008/062308
- DE-U1- 20 121 294
- DE-U1- 20 219 176
- JP-A- S5 878 926
- JP-A- S61 111 214

## Description

### Field of the invention

The object of the present invention is a device for continuous unloading of non-coherent material for ship holds, barges, storage crates or the like. The invention in particular relates to a split type unload device equipped with a horizontal excavating foot assembly, operatively connected for the transfer of non-coherent material with a vertical bucket chain elevator assembly and rotatably mobile with respect thereto.

### Background of the invention

Devices for continuous unloading of non-coherent material are known, intended to collect non-coherent and/or loose material, such as for example coal, coke and loose minerals or material of non-coherent nature, contained in the holds of specific load ships, barges or storage crates. The known continuous unload devices substantially are divided into two types: a first type of continuous unload devices which for the excavation, the loading and the upwards movement of the non-coherent material, take advantage of a single movement unit which absolves all these functions, and the continuous unload devices of the split type in which there is a horizontal foot which generally scrapes the loose material with the aim of conveying it towards an excavating vertical bucket chain elevator assembly, to which the foot is operatively connected and with which it may be in both a fixed and rotatable engaged relationship.

With respect to the devices of the first type, for example European Patent EP 0 799 782 is known, in which there is described a single device collecting assembly, in which the excavating foot has a variable geometry according to the height variation of the substantially vertical extension portion of the collecting assembly. In addition to having an intrinsic limitation of the movements in a hold, this type of device does not autonomously allow a complete collection of the loose material from all the areas of the hold and is to be equipped with significantly complex automation devices. With respect to the devices of the second type, it is known in the name of the same Applicant, European Patent EP 2 084090, in which the continuous unload device consists of a substantially horizontal extension and position scraping assembly, rotatably connected to a vertical extension excavating and elevating assembly, in which the main task of the scraping assembly is the one of nearing the loose material to the action and influencing area of the excavating and elevating assembly. The nearing operation occurs with the loose material that freely moves without any type of guide or containment between the action area of the scraping assembly and the influencing area of the elevating assembly. The known devices are therefore capable of controlling and containing the non-coherent material in the scraping and nearing step to the influencing area of the bucket chain elevator assembly with apparent losses of load and complete lack of containment of the powders generated by the movement of highly powdery material.

Moreover, the known devices have burying problems of the excavating devices due to the possibility of landslides of the walls of the material with substantially non-coherent structure, particularly if significant excavating heights are used. Additionally, the known devices require complex maintenance and fine-tuning operations according to the complexity of the moving elements, the electronic systems controlling the operation and the synchronisation thereof especially if the devices are to operate at increased unload volumes.

It is also not possible to quickly replace the foot elements with the devices of the type disclosed because it would be necessary to implement complex manoeuvres on the counter-weights balancing the whole structure, also outside the hold or storage crate. Further unloading devices of the second type are known from documents: EP0209212A1, JPS61111214A, JPS5878926A and WO2008/062308A2. Further, EP0209212A1 discloses a device according to the preamble of claim 1.

### Object of the invention

In the constant evolution of unload assemblies or systems and devices of non-coherent and/or loose material from the ship holds or storage and collection crates, the Applicant has proposed to resolve the problems of the known systems by making a continuous unload device of the split type, equipped with a horizontal excavating foot assembly, operatively connected with a vertical elevator and rotatably movable with respect thereto, that is more compact and lightweight with respect to the known devices and that simultaneously allows increased overall efficiency of the unloading operations, thus decreasing the losses of transport already from the hold excavating step. It is another object to allow the easy and quick replacement of the excavating elements in the case of maintenance or to provide for the excavation and collection of material with different characteristics. It is another object again to obtain an improved containment of the powders generated by the loose, particularly powdery material during the excavation by confining and managing the powders mainly in the excavating area. Such peculiarity of the present invention is particularly useful in sensitive environments. It is a further object to eliminate the problems of burying the excavating foot due to the typical landsliding of loose material with a non-coherent structure by means of the compactness of the foot and subsequent overall lower excavating height. Accordingly, this also results in an increased efficiency in the overall times of the unloading operations of the holds, with obvious positive effects on the energy savings in managing the systems and final economic advantages in the treatment speed of the loads and the delivery thereof for end use.

A device for continuous unloading of non-coherent material according to the invention is disclosed in any one of claims 1-12, while a process for continuous unloading of non-coherent material according to the invention is disclosed in claim 13.

### Brief description of the drawings

The characteristics and advantages will be more apparent from the following description relating to preferred but non-limiting embodiments of a device for continuous unloading of non-coherent material for ship holds, barges, storage crates or the like, according to the present invention.

The description below refers by way of non-limiting example, to the accompanying drawings, in which:

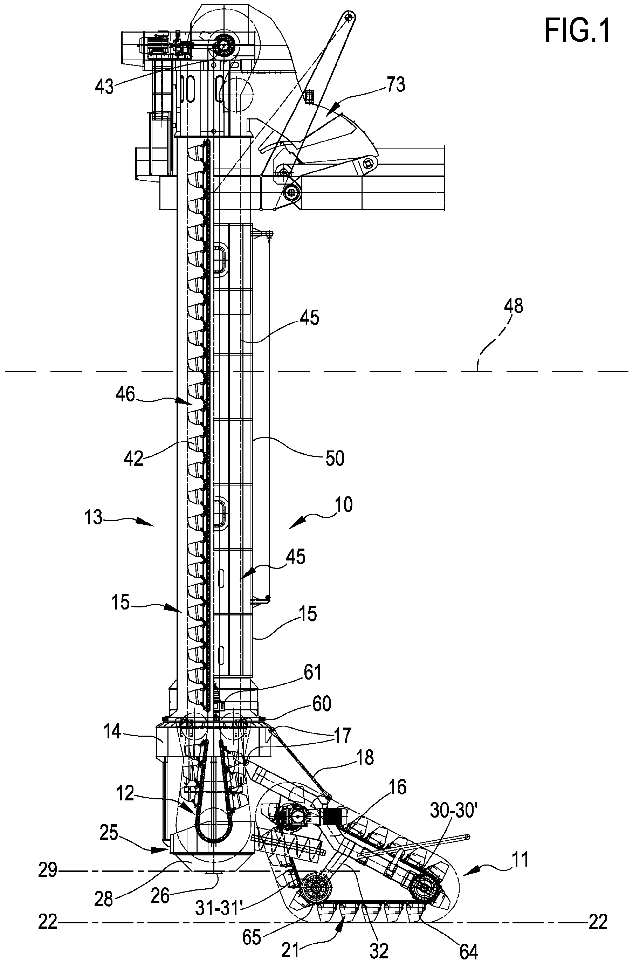

fig. 1 is a partial cross-section view of a device for continuous unloading of non-coherent material according to the present invention,
fig. 2 is a further view of a detail of fig. 1,

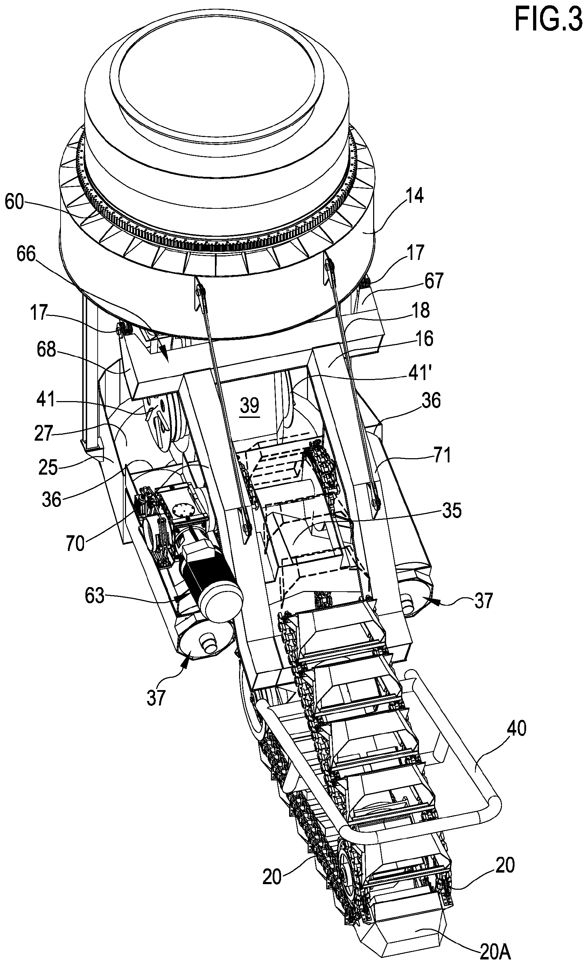

fig. 3 is a perspective, partial cross-section top view of some of the elements of fig. 2,

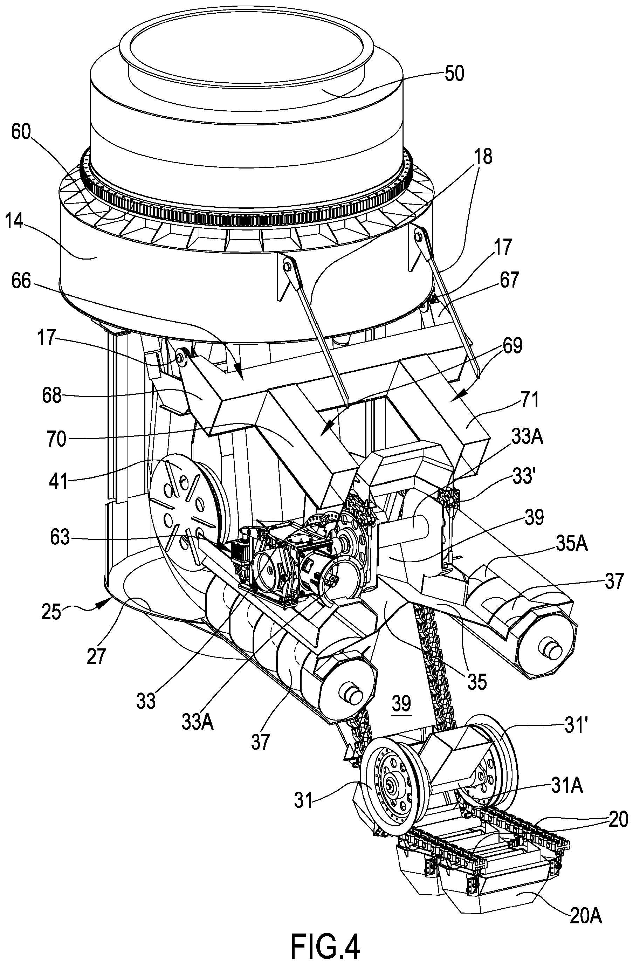

fig. 4 is a further side perspective view, partially cross-sectioned, of some of the elements of fig. 2,

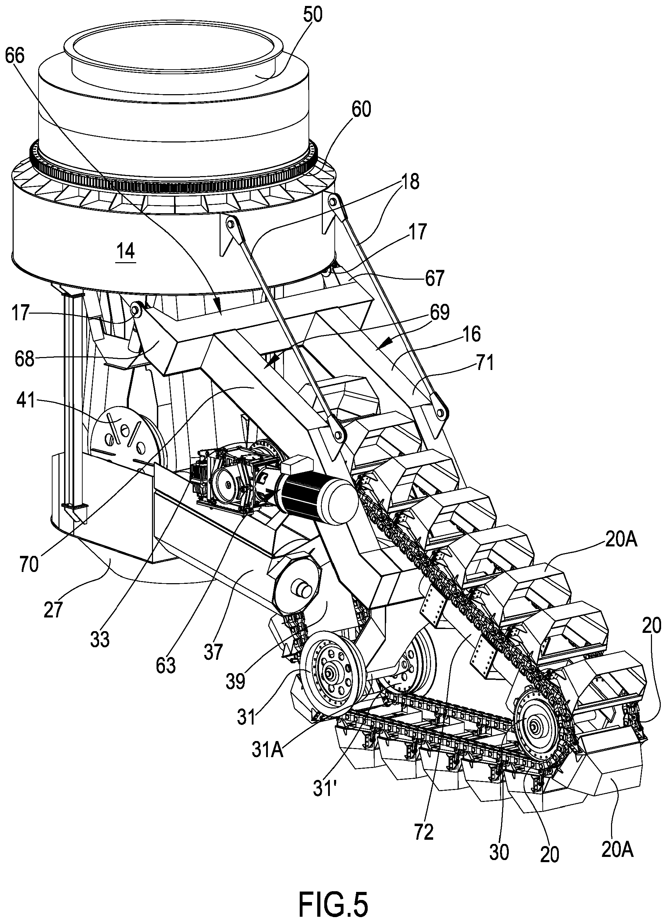

fig. 5 is another perspective view of some of the elements of fig. 2,

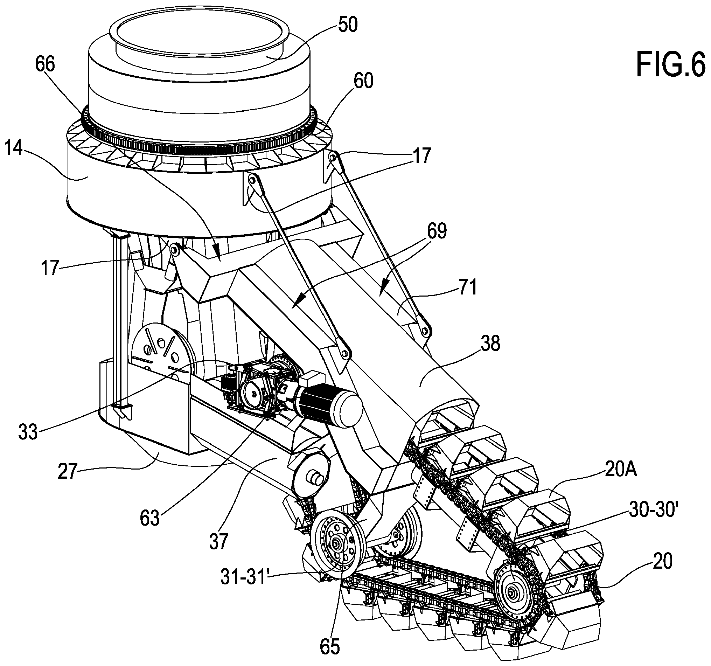

fig. 6 is another perspective view of some of the elements of fig. 2, evidencing a powder containment element,
fig. 7 is a partial cross-sectioned view of a second embodiment of a device for continuous unloading of non-coherent material according to the present invention,
fig. 8 is a further view of a detail of fig. 7,
fig. 9 is a top plan view of the elements of fig. 8,
fig. 10 is a perspective rear view, partially cross-sectioned, of some of the elements of fig. 8, and
fig. 11 is a further perspective view, partially cross-sectioned, of some of the elements of fig. 8, and of a powder containment element.

### Detailed description

With reference to figures from 1 to 6, in a first and preferred embodiment of the invention, 10 indicates a device for continuous unloading of non-coherent material (not shown), of the split type, equipped with a horizontal excavating foot assembly 11 with substantially triangular geometry that can be adjusted. The excavating foot assembly 11 is rotatably connected with a lower terminal portion 12 of a bucket chain elevator assembly having a vertical axis, indicated as whole with 13, by means of a rotating ring 14 operatively connected to an end tubular portion 15 of the containment structure of the bucket chain elevator assembly 12.

The horizontal excavating foot assembly 11 consists of a support structure, indicated as a whole with 16, made with a first U-shaped constraining boxed portion 66 with two arms 67 and 68 facing towards and connected with the ring 14, and a second boxed portion 69, substantially in the form of a knee beam, it also U-shaped, and integral with the first portion 66. The second boxed portion defines two arms 70 and 71 connected on one side with the portion 66 and on the other with a first front support arm 72 for elements of an excavating device 19.

The whole horizontal excavating foot assembly is therefore fixed to the rotating ring 14 by means of the arms 67 and 68 connected to the lower portion of the ring 14 by means of a plurality of constraining elements 17 and also by a couple of tie rods 18 which connect the arms 70 and 71 to the upper portion of the ring 14.

The rotating ring 14 is equipped at the top with a toothed fifth-wheel 60 that engages in a drive, indicated as a whole with 61.

A mobile excavating device 19 consisting of a double chain 20 which drags a plurality of buckets 20A is provided on board the support structure 16. The double chain 20 provides a three-branch path, a first excavating branch 21 as such, which is fundamentally horizontal with respect to an excavating level 22, a second branch 23 ascending from the excavating level 22 and a third oblique branch 24 which closes on the branch 21 to form a closed path.

The oblique branch 24 also transits through the space defined by the arms 70 and 71 of the second boxed portion 69 of the support structure 16.

The second boxed portion 69 of the support structure 16 houses, at the end of the support arm 72 thereof, a first couple of freely moving front base wheels 30-30' joined by means of an axis 30A, while a second couple of freely moving rear base wheels 31-31', joined by an axis 31A, is housed on a second rear arm 32 of the second boxed portion 69 of the support structure 16. This arm 32 is facing backwards with respect to arm 72.

The couples of wheels 30-30' and 31-31' are housed on the respective arms 72 and 32 by means of the interposition of chain tensioner devices indicated with 64 for the couple of front wheels and with 65 for the couple of rear wheels. The movement of the chain tensioners and the subsequent variation of the relative position of the three couples of wheels also defines the adjustment of the overall triangular geometry of the whole excavating foot assembly 11.

A third couple of powered wheels 33-33' joined by an axis 33A preferably is placed at the top of the first and second couple of wheels. The drive of the wheels 33-33' is indicated as a whole with 63.

The portion of excavating path 21 generally and preferably is horizontal with the axes 30A and 31A respectively of the couple of front wheels 30-30' and of the couple of rear wheels 31-31' on the same level, due to the reciprocal positions and inclinations of the arms 32 and 72. Indeed, the end positions of the arms 32 and 72 are at the same level with respect to the excavating level 22. Alternatively, in particular excavating conditions or for collecting material with particular characteristics, it is clear to a skilled expert that by acting on the chain tensioners 64 and 65, the angle of incidence of the excavating branch 21 may be varied - albeit to a limited extend - with respect to the excavating level 22.

In the motion of the excavating chain 20, the buckets 20A collect non-coherent material (not shown) from the excavating level 22 by means of the excavating branch 21 to convey it by means of the second ascending branch 23 to the upper oblique branch 24 where the reversal of the position of the excavating buckets 20A causes the non-coherent material to fall by gravity onto a shaped fixed slide 35.

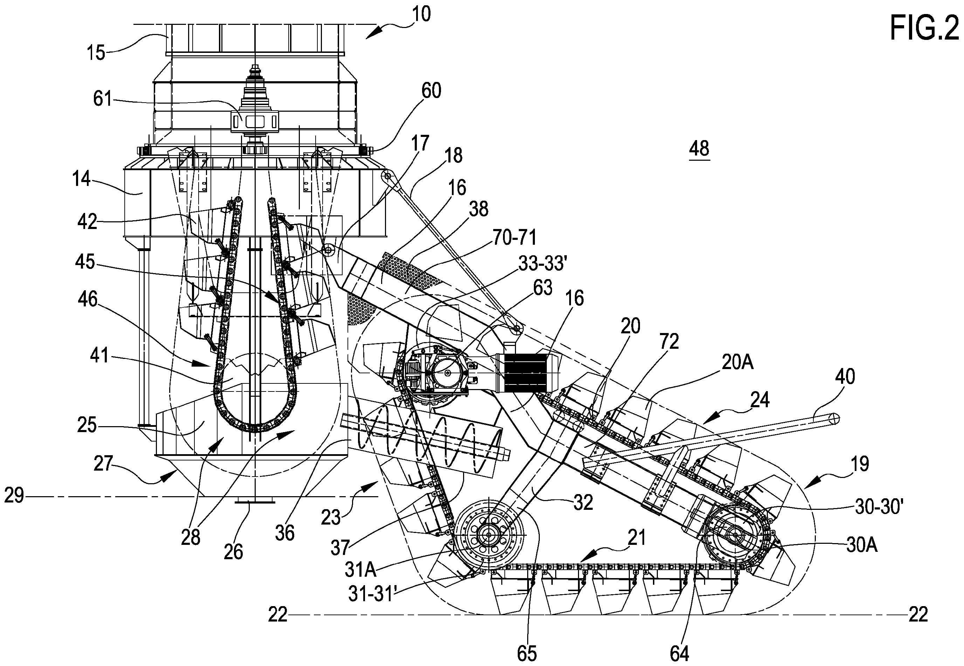

A closed hopper 25 is also integral with the support structure 16, inside this closed hopper the lower terminal portion 12 of the bucket chain elevator assembly 13 extends. The closed hopper 25 is equipped with a tapping opening 26 placed on its bottom wall 27. The bottom wall 27 in turn defines a collecting area 28 for the terminal portion 12 of the bucket chain elevator assembly and a level 29 with respect to which the excavating level 22 is at a lower height, as shown in figure 2.

On board the support structure 16 and supported thereby it is also provided a device for conveying of non-coherent excavating material consisting of a shaped fixed slide 35 placed under the bucket chain 20, between a couple of cochleas 37 and close to the closed hopper 25. The two cochleas 37 on the sides of the fixed slide may have a large diameter and are fed by means of respective mouths 35A with the material that from the buckets 20A reaches the slide 35 by gravity. The cochleas 37 are independent of each other and are capable of conveying the non-coherent material to the collecting area 28 of the closed hopper 25 through the couple of inlet openings 36. Alternatively, to the cochleas 37, which in any case are also configured like a horizontal transportation device, the skilled expert may directly recognise the use of alternative horizontal transportation device solutions, such as for example one or more conveyor belts, of the rubber or chain type (not shown), as long as they are capable of collecting the material from the excavating buckets 120A and of conveying it to the hopper 25 by means of the inlet openings 36.

The support structure 16 provides a first, substantially U-shaped, downwards facing containment bulkhead of the powders 38 at the top of the oblique branch 24 of the excavating device 19. A second bulkhead 39 adapted to contain the powders of the ascending branch 23 of the excavating device is provided at the back of the fixed slide 35.

A reinforced protection arm 40 of the horizontal excavating foot assembly is mounted in a central position of the arm 72 of the support structure 16 and extends past the overall volume of the excavating foot assembly 11 and is defined by the pair of front wheels 30-30' about which the buckets 20A transit in the oblique branch thereof. The arm 40 allows the excavating foot assembly 11 and all the elements on board to be protected from collision and damage in all their related moving displacements, whether rotational and/or horizontal or vertical translation, which are performed inside a hold or storage crates during the normal operating steps of continuous unloading.

Inside the closed hopper 25, the lower terminal portion 12 of the bucket chain elevator assembly having a vertical axis provides a couple of freely moving deviation wheels 41-41' about which load buckets 42 transit, coming from the descending branch 45 of the bucket chain elevator assembly 13.

After the passage about the couple of deviation wheels 41, the buckets 42 transit in the collecting area 28 of the closed hopper 25 to collect the non-coherent material coming from the cochleas 37, which is unloaded in the collecting area 28 through the couple of inlet openings 36.

The non-coherent material (not shown) collected and loaded in the buckets 42 is conveyed upwards and outside a hold or storage area (diagrammatically indicated with 48) by means of the ascending branch 46 of the bucket chain elevator assembly 13.

The descending branches 45 and the ascending branches 46 of the bucket chain elevator assembly 13 form a closed path for the buckets 42, which in turn are moved by an upper controlled wheel 43 activated by a control unit 44. Moreover, the buckets 42 of the branches 45 and 46 transit protected inside the tubular containment structure 50. The buckets 42 unload, by gravity, the non-coherent material loaded previously in the collecting area 28 onto an unloading slide structure 73 close to the controlled wheel 43 and at the path reversal (from ascending to descending). The first bulkhead 38, the second bulkhead 39, the closed hopper 25 together with the fixed slide 35 and the cochleas 37 directly connected with the hopper, are all elements which concur to form, solely within the excavating area 22, an effective containment and confinement device of the powders generated in the excavation of particularly powdery material, inside for example a hold or a storage crate.

The powders are further contained due to the fact that the bucket chain elevator assembly having a vertical axis 13 is further included within a tubular containment structure 50 adapted to further minimize the spreading phenomenon of the excavating powders.

Moreover, as mentioned above, the closed hopper 25 is equipped on its bottom wall, with a tapping opening 26 from which access may be provided to the hopper 25 itself to perform maintenance and also to eliminate water or moisture transported by the non-coherent material and which may accumulate on the bottom of the hopper 25 itself.

In the normal operations of the unload device 10 according to the present invention, the excavating foot assembly 11 that is rotatably connected with a lower terminal portion 12 of the vertical bucket chain elevator assembly 13 may rotate by means of the ring 14 connected to the end tubular portion 15 of the containment structure of the bucket chain elevator assembly 12. The rotating movement allows the excavating foot assembly 11 to perform 360° rotations inside a hold so that it reaches all the useful excavating points of the hold, being moved in known manner also horizontally and vertically and in an integral manner with the vertical bucket chain elevator assembly 13.

During the excavation, the drive 63 moves the double bucket chain 20 on board the foot assembly to collect non-coherent material from the defined area from the excavating level 22 and to convey it to the slide 35.

The slide 35 divides the non-coherent material between the couple of cochleas 37 which in turn push the material through two inlet openings 36 inside the hopper 25.

The non-coherent material that is positioned in the collecting area 28 of the hopper 25 is then collected by the load buckets 42 of the vertical bucket chain elevator assembly 13 which transit in the area 28. The buckets 42 collect the non-coherent material and lift it from the hopper 25, conveying it according to the ascending branch 46 towards the outside of a hold and to the unloading structure 73.

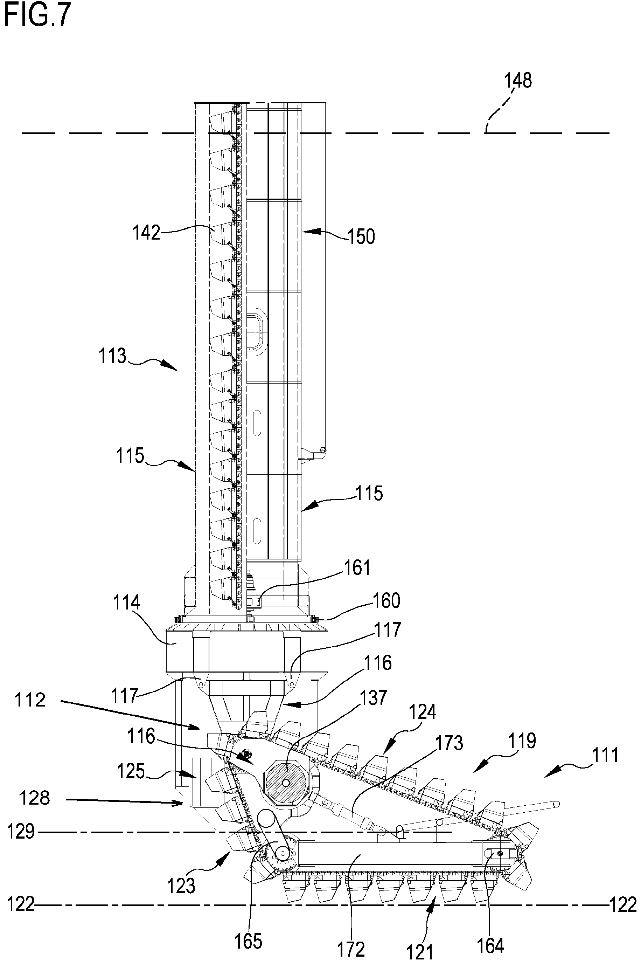

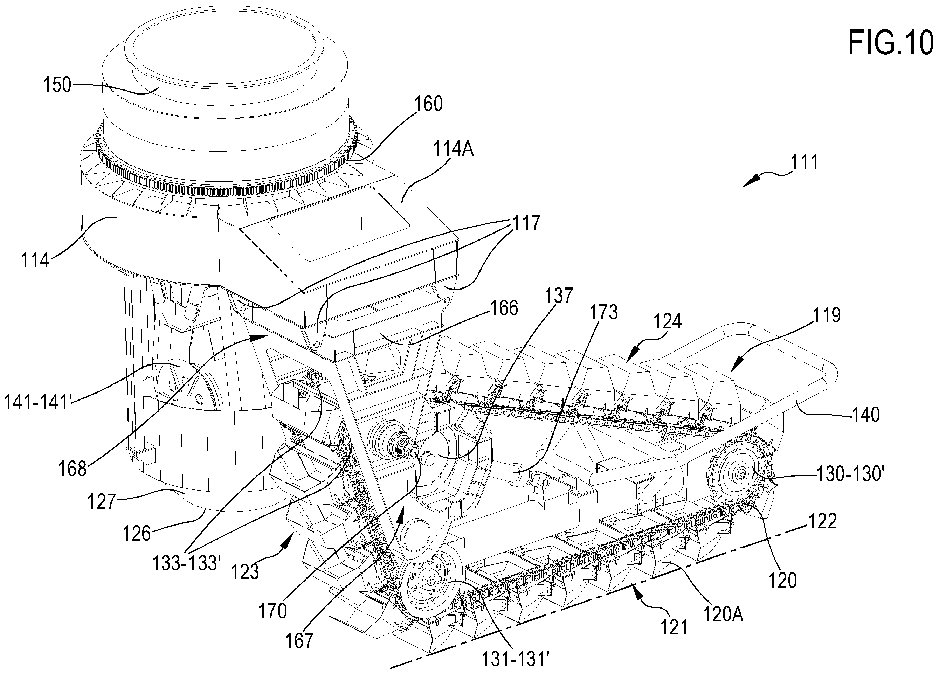

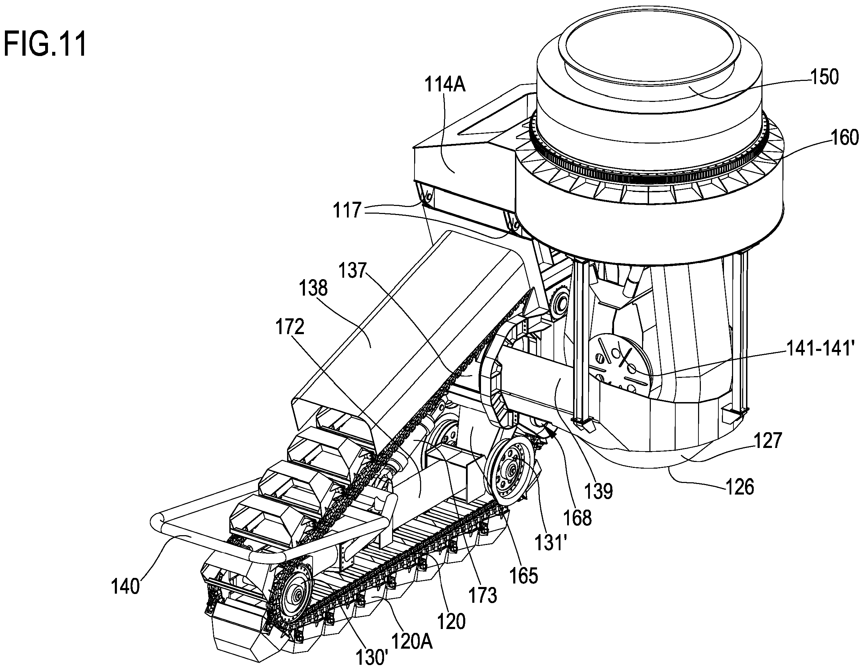

The invention is also illustrated in a second embodiment thereof in figures 7 to 11, in which 100 depicts a device for continuous unloading of non-coherent material (not shown), of the split type, equipped with a horizontal excavating foot assembly 111 with substantially triangular geometry that can be adjusted. The excavating foot assembly 111 is rotatably connected with a lower terminal portion 112 of a bucket chain elevator assembly having a vertical axis, indicated as whole with 113, by means of a rotating ring 114 operatively connected to an end tubular portion 115 of the containment structure of the bucket chain elevator assembly 112.

The horizontal excavating foot assembly 111 consists of a complex, U-shaped support structure facing downwards, indicated as a whole with 116, made with a constraining boxed portion 166 and with two complex arms 167 and 168 facing downwards and tapered and adapted to house various components, as seen in the following. The boxed portion 166 of the complex support structure 116 is fixed, by means of constraints 117, to a side boxed element 114A integral with the rotating ring 114 and protruding with respect thereto.

The whole horizontal excavating foot assembly is therefore fixed to the rotating ring 114 and is rotatably and solidly connected with it by means of the boxed portion 166 and the constraints 117.

The rotating ring 114 is equipped at the top with a toothed fifth-wheel 160 which engages in a drive, indicated as a whole with 161.

A mobile excavating device 119 consisting of a double chain 120 which drags a plurality of buckets 120A is provided on board the support structure 116. The double chain 120 provides a three-branch path, a first excavating branch 121 as such, which generally is in horizontal position with respect to an excavating level 122, a second branch 123 ascending from the excavating level 122 and a third oblique branch 124 which closes on the branch 121 to form a closed path.

The ascending branch 123 and the oblique branch 124 transit through the space defined by the arms 167 and 168 of the support structure 116.

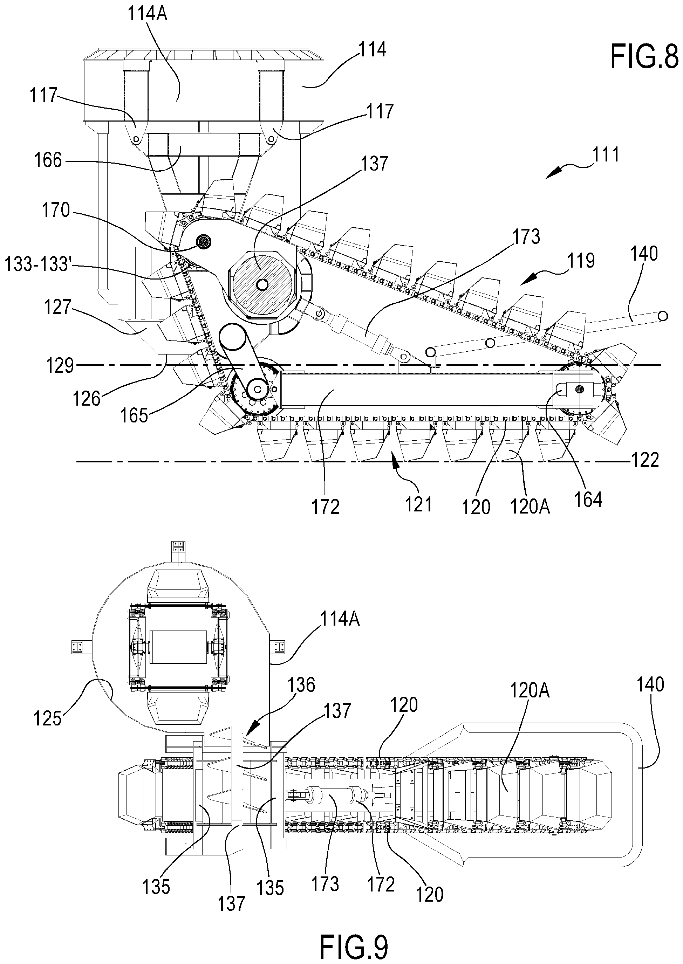

There are also housed, between the arms 167 and 168, from the top downwards, a couple of powered wheels 133-133' and the relative drive of which only the control axle is diagrammatically indicated with 170; a fixed slide opening 135 (fig. 9) for the inlet by gravity of the non-coherent material to a cochlea 137 equipped with its own drive (not shown) is located below the beginning of the branch 124. It is to be understood that the cochlea 137 may be replaced with any similar horizontal conveyor that the skilled expert might want to use in an alternative solution.

There is provided, below the cochlea 137, a lever 165, hinged between the arms 167 and 168, which supports a couple of freely moving rear wheels 131-131', their axle 131A and an arm 172.

There is fixed, between a median portion of the arm 172 and the support structure 116, a hydraulic or pneumatic member 173 which may vary the inclination thereof with respect to the excavating level 122. A rigid structure 140 for protection against collisions of the excavating foot assembly 111 during the excavating and rotating operations is fixed at the front of member 173, again on arm 172, the rigid structure being entirely similar in terms of function and structure, to the one used and described for the first embodiment of the invention. A couple of freely moving front wheels 130-130' and the respective axle 130A is mounted in the front portion of the arm 172 by means of the interposition of a specific chain tensioner 164.

The interposition and the movement of the chain tensioner 164 and the movement of the lever 165 by means of the activation of the member 173 on the one hand allows adjusting the overall triangular geometry of the excavating foot assembly 111, with subsequent variation of the relative position of the three couples of wheels present, and on the other hand, varying the angle of incidence between the excavating branch 121 and the excavating level 122. It is clear that the skilled expert may act on the variations of this angle required for particular excavating conditions or for collecting non-coherent material with particular characteristics.

Otherwise, in analogy with the first embodiment of the present invention, the excavating level 122 and the excavating branch 121 are substantially horizontal and parallel to each other because the couples of front wheels 130-131 and rear wheels 131-131' are on the same level.

In the motion of the excavating chain 120, the buckets 120A collect non-coherent material (not shown) from the excavating level 122 by means of the excavating branch 121 to convey it by means of the second ascending branch 123 to the upper oblique branch 124 where the reversal of the position of the excavating buckets 120A causes the non-coherent material to fall by gravity onto the fixed slide opening 135 which puts the material inside the cochlea 137. The cochlea 137, mounted on the complex support structure 116, therefore is rotatably and solidly connected together with the latter with the closed hopper 125 inside of which it dumps the non-coherent material by means of an inlet opening 136 provided at an end of the cochlea and communicating with the hopper 125, all in analogy with that described relative to the first and preferred embodiment of the present invention.

The lower terminal portion 112 of the bucket chain elevator assembly 113 also extends in the closed hopper 125; the closed hopper 125 is equipped with a tapping opening 126 placed on its bottom wall 127. The bottom wall 127 in turn defines a collecting area 128 for the terminal portion 112 of the bucket chain elevator assembly and a level 129 with respect to which the excavating level 122 in any case is at a lower height, as shown in figure 8.

Preferably, the support structure 116 provides a first, substantially U-shaped, downwards facing containment bulkhead of the powders 138 at the top of the oblique branch 124 of the excavating device 119. According to the preferences of the end user, there may or may not be a bulkhead 138. A second bulkhead 139 is provided at the side and substantially at the outlet opening 136 of the cochlea 137, towards the hopper 125, the second bulkhead also being adapted to contain the powders in the area at the cochlea or at any other horizontal transportation device.

Inside the closed hopper 125, the lower terminal portion 112 of the bucket chain elevator assembly having a vertical axis provides a couple of freely moving deviation wheels 141-141' about which load buckets 142 transit, coming from the descending branch 145 of the bucket chain elevator assembly 113.

After the passage about the couple of deviation wheels 141, the buckets 142 transit in the collecting area 128 of the closed hopper 125 to collect the non-coherent material coming from the cochlea 137, or from any horizontal transportation device, and which is unloaded in the collecting area 128 through the inlet opening 136.

The non-coherent material (not shown) collected and loaded in the buckets 142 is conveyed upwards and outside a hold or storage area (diagrammatically indicated with 148) by means of the ascending branch 146 of the bucket chain elevator assembly 113.

The descending branches145 and ascending branches 146 of the bucket chain elevator assembly 113 are closed in a tubular structural element 150 adapted to contain the noise of the system and also to contain the powders, and form a closed path for the buckets 142, which in turn are moved by activations entirely in analogy with the ones of the first embodiment of the present invention and therefore they are not shown.

Thus, the first bulkhead 138, the second bulkhead 139, the closed hopper 125 together with the fixed slide opening 135, the cochlea 137 and the tubular structural element - all directly connected to the hopper 125 itself - are the elements that concur to form an effective containment and confinement device of the powders and the noises generated in the excavation of any type of material.

Moreover, as mentioned above, the closed hopper 125 is equipped on its bottom wall, with a tapping opening 126 from which access may be provided to the hopper 125 itself to perform maintenance and also to eliminate water or moisture transported by the non-coherent material and which may accumulate on the bottom of the hopper 125 itself.

In the normal operations of the unload device 100, also according to this further embodiment of the invention, the excavating foot assembly 111 that is rotatably connected with a lower terminal portion 112 of the vertical bucket chain elevator assembly 113 may rotate by means of the ring 114 connected to the end tubular portion 115 of the containment structure of the bucket chain elevator assembly 112. The rotating movement allows the excavating foot assembly 111 to perform 360° rotations inside a hold such that, when moved in known manner also horizontally and vertically and in an integral manner with the vertical bucket chain elevator assembly 113, the foot assembly 111 reaches all the useful excavating points of the hold.

During the excavation, the drive 170 moves the double chain 120 and its buckets 120A on board the excavating foot assembly 111 to collect non-coherent material from the defined area from the excavating level 122 and to convey it to the slide opening 135.

The slide opening 135 conveys the non-coherent excavating material by gravity to the cochlea 137, or to any horizontal transportation device, which in turn pushes the material through the inlet opening 136 into the hopper 125.

The non-coherent material that is positioned in the collecting area 128 of the hopper 125 is then collected by the load buckets 142 of the vertical bucket chain elevator assembly 113 which transit in the area 128. The buckets 142 collect the non-coherent material and lift it from the hopper 125, conveying it according to the ascending branch 46 towards the outside of a hold 148. The vertical movement of the continuous unload device 10, 100, as also the horizontal movement, occur for both the embodiments of the present invention by means of the control of the vertical bucket chain elevator assembly coordinated with the 360° rotating motion of the excavating foot assembly 11, 111.

All the movements of the unload device 10, 100 according to the invention are controlled and monitored by a specific control unit that coordinates the movements, the excavating and the taking away of the material collected from a hold or from a storage area.

According to the embodiments and construction solutions of the present invention, a new and particular process is also created, for continuous unloading of non-coherent material in which, in a continuous sequence, there is provided the start of a first continuous excavating step during which the excavating foot assembly starts continuously collecting the non-coherent material, a second step in which the non-coherent material is released to a substantially horizontal transport system, a third step of conveying the non-coherent material from the horizontal transport system to a closed collecting area, a fourth step of collecting, from the closed collecting area, and delivering the non-coherent material to a vertically moving elevator assembly which provides the transport of the non-coherent material from the hold or storage crate to the outside; the first step of excavating being carried out at a height lower than the fourth collecting step.

The unload device 10, 100 according to the present invention overall is more compact and lightweight than the known devices, in particular due to the implementation of the excavating foot assembly 11, 111 having a geometry that can be adjusted. The whole structure is simpler to construct and maintain, thus avoiding all the movements relative to the known devices having a variable geometry.

Another apparent advantage of an excavating foot assembly 11, 111 according to the present invention consists in the possibility of replacing the mobile excavating device 19, 119, without having to resort to complicated operations for compensating for the weights of the structures to be replaced, thus simultaneously allowing the quick replacement of the excavating or bucket elements with others of different type.

Moreover, the simplicity of the structure of the continuous unload device 10 advantageously allows an easier synchronisation of the excavating and rotating movements of the excavating foot assembly 11, 111 with the ones of the bucket chain elevator assembly 13, 113, thus significantly simplifying the control logic of the relative control units (not shown).

A further advantage of the present invention is given by the presence of a simple and effective containment system of the excavating powders, which simultaneously also reduces the noise emissions. Indeed, the bulkheads 38, 39, 138, 139, together with the closed hopper 125, the fixed slide 35 and the fixed slide opening 135 and the cochleas 37 or 137 directly connected with the hopper, confine both the powders and the noise emissions to a closed environment, in the hold or storage area and close to the area defined by the excavating level 22 or 122.

Furthermore, such advantages are even more amplified by the fact that also the bucket chain elevator assembly 13, 113 moves inside the tubular containment structure 50 or 150 (both of the powders and of the noise emissions).

The use of an excavating foot assembly 11, 111 equipped with a mobile excavating group 19, 119 which performs the excavation by means of a double bucket chain 20 or 120, together with the bulkhead system 38-39 or 138-139 and the cochleas 37 or 137, forms an assembly of elements which advantageously reduce, up to eliminating, the losses of load of non-coherent material when the non-coherent material is transferred from the excavating area to the hopper 25, 125.

The closed hopper 25, 125 in turn and due to its nature, prevents losses of load of the non-coherent material received and advantageously allows the buckets 42, 142 of the elevator device to collect all the material and convey it to the outside.

Thus, the further non-negligible advantage is obtained of ensuring the nominal unload capacity generally indicated (t/h) for continuous unload devices and systems made according to the present invention.

A further subsequent advantage of the operations of the device 10, 100 according to the invention is given by lower overall energy consumption resulting from the efficiency of excavation, transport and taking away the non-coherent material.

## Claims

1. Device (10; 100) for continuous unloading of non-coherent material, of the split type, provided with a horizontal excavating foot assembly (11; 111) rotatably connected with the lower terminal portion of a bucket chain elevator assembly (13; 113) having a vertical axis,
the horizontal excavating foot assembly (11; 111) is equipped with a mobile excavating device (19; 119), the excavating device being capable of excavating and collecting non-coherent material from an excavating area (22; 122) and to convey the same to a collecting area (28; 128), the mobile excavating device being oriented in a way such that its excavating portion (21; 121) moves in a direction substantially horizontal in respect to the excavating area (22; 122) and at a height lower than the collecting area (28; 128); wherein the mobile excavating device (19; 119) has an upper oblique portion;
a closed collecting hopper (25; 125) housing the lower terminal portion (12; 112) of the bucket chain elevator assembly (13; 113) having a vertical axis,
**characterized in that**
the horizontal excavating foot assembly (11; 111) is constituted by a support structure (16; 116) connected by a plurality of constraints (17, 18, 117) to a ring (14; 114) coaxially rotatable about the lower terminal portion (12, 112) of the bucket chain elevator assembly (13; 113) having a vertical axis,
**and in that**
substantially horizontally moving conveyor elements (37; 137) and fixed conveyor elements (35; 135) for the non-coherent material are provided on said mobile excavating device (19; 119), said elements being capable to move and convey said non-coherent material from the excavating area (22; 122) to the closed collecting hopper (25; 125), through the upper oblique portion of the excavating device (19; 119).

2. Device (10; 100) for continuous unloading according to claim 1 **characterized in that** said collecting closed hopper (25; 125) is rotatably and solidly connected with the excavating foot assembly (11; 111) and with the mobile excavating device (19; 119).

3. Device (10, 100) for continuous unloading according to claim 1 **characterized in that** said mobile excavating device (19; 119) and said terminal portion (12; 112) of the bucket chain elevator assembly (13; 113) are provided with a plurality of containment elements for containing the powders generated by the non-coherent material close to the excavating area (22; 122) and close to the collecting area (28; 128).

4. Device (10; 100) for continuous unloading according to claim 3 **characterized in that** the plurality of containment elements is formed by a containment bulkhead (38; 138) in correspondence to the upper oblique portion (24; 124) of releasing and unloading the excavating device (19; 119), by the hopper (25;, 125) and by a tubular containment structure (50; 150) of the elevator assembly (13; 113).

5. Device (10;, 100) for continuous unloading according to claim 1 **characterized in that** the mobile excavating device (19; 119) on board the support structure (16; 116) of said horizontal excavating foot assembly (11; 111) is formed by a double endless chain (20; 120) carrying a plurality of excavating buckets (20A; 120A), the buckets (20A; 120A) being moved along a three branch path, a first branch (21; 121) being horizontal relative to the excavating level (22; 122),a second branch (23; 123) ascending from the excavating level (22; 122) and a third upper oblique branch (24; 124) which closes the reconnects to the first branch (21; 121) and defines the area of release and unload of the excavating device.

6. Device (10; 100) for continuous unloading according to claim 5 **characterized in that** relative to the support structure (16;116) the three branches (21, 23, 24 121, 123, 124) of the path of the chain (20; 120) and of the buckets (20A; 120A) are defined by a first couple of front base freely moving wheels (30, 30'; 130, 130') housed in a front portion of the supporting structure (16; 116), by a second couple of rear base freely moving wheels (31, 31'; 131, 131') housed in a rear portion of said support structure (16; 116) and by a third couple of powered wheels (33,33', 133, 133') placed in an upper position relative to the first and second couple, said first couple (30, 30'; 130, 130') and said second couple of wheels (31, 31'; 131, 131') being both placed at the same level next to the excavating area (22; 122) and being provided with adjusting devices (64, 65; 164, 165) for regulating the relative position among the said first, second and third couple of wheels.

7. Device (10; 100) for continuous unloading according to claim 1 and 6 **characterized in that** the geometry of the horizontal foot assembly (11; 111) can be adjusted by way of adjusting the relative position among said first (30, 30'; 130, 130'), second (31, 31'; 131, 131') and third couple of wheels (33, 33'; 133, 133').

8. Device (10; 100) for continuous unloading according to claim 1 **characterized in that** the fixed conveyor elements provided on the support structure are formed by a fixed slide (35; 135) which convey the non-coherent material towards the horizontally moving conveyor elements constituted by at least one cochlea (37; 137) mounted next to the fixed slide (35; 135) said at least one cochlea being connected with at least one respective inlet opening (36; 136) of the closed collecting hopper (25; 125).

9. Device (10) for continuous unloading according to claim 8 **characterized in that** the fixed slide element (35) is a shaped slide that splits and conveys the material carried by the buckets (20A) towards the moving conveyor elements constituted by a couple of horizontally transporting cochleas (37) connected to the support structure (16) each located on one side of the slide (35) and between said unloading and release area of the non-coherent material and said closed collecting hopper (25) to which they are connected via respective inlet opening (36).

10. Device (10) for continuous unloading according to claim 5 **characterized in that** relative to the support structure (16) the three path branches (21, 23, 24) of the chain (20) and of the buckets (20A) are defined by a first couple of front base freely moving wheels (30, 30') housed at an end of a first front arm (72) of the support structure (16), by a second couple of rear base freely moving wheels (31, 31') mounted on a second rear arm (32) of the support structure (16) and by a third couple of powered wheels (33, 33') placed preferably in an upper position in respect to the first and second couple of wheels, said first (30, 30') and second couple of wheels (31, 31') being both placed at the same level next to the excavating area(22) and being provided with position adjusting devices (64, 65) for the positions among said first, second and third couple of wheels.

11. Device (100) for continuous unloading according to claim 5 **characterized in that** relative to the support structure (116) the three path branches (121, 123, 124) of the chain (120) and of the buckets (120A) are defined by a first a first couple of front base freely moving wheels (130, 130') housed in a front portion of an arm (172) having variable inclination realtive to the support structure (116) , by a second couple of rear base freely moving wheels (131, 131') housed in a rear portion of said arm (172) and movable solidly with said arm relative to support structure (116) by means of a lever (165) in association with the inclination of said arm (172), and by a third couple of powered wheels (133, 133') placed preferably in an upper position in respect to the the first and second couple of wheels, said first 130, 130') and said second couple of wheels (131, 131') being both substantially placed at the same level next to the excavating area (122) and being provided with position adjusting devices (164, 165) in order to adjust the the relative position among said first, second and third couple of wheels.

12. Device (10; 100) for continuous unloading according to claim 1 **characterized in that** the horizontal foot assembly (11; 111) is rotatably connected coaxially with a a lower terminal portion (12; 112) of the vertical elevator assembly by means of a rotating ring (14, 114) connected with the end tubular portion (15; 115) of the containment structure (50; 150) of the elevator assembly (13; 113), thus allowing 360° degree rotation of the foot assembly in such a way to reach all useful excavating areas of the hold (48; 148) in association with the horizontal and vertical movement of the elevator assembly (13; 113) to which the foot assembly is solidly connected for said movements.

13. Process for continuous unloading of non-coherent material, particularly for ship holds or storage tanks, performed by a device according to any one of the preceding claims, wherein the process comprises, in a continuous sequence, the start of a first continuous excavating step during which the foot assembly starts collecting the non-coherent material, followed by a second step in which the non-coherent material is being released to a substantially horizontal transport system having said substantially horizontally moving conveyor elements (37; 137) and fixed conveyor elements (35; 135), a third step of conveying the non-coherent material from the horizontal transport system to a closed collecting area, a fourth step of collecting from the closed collecting area and delivering the non-coherent material to the vertically moving elevator assembly (13; 113) which provides the transport of the non-coherent material, in particular from the ship hold or storage tank to the outside; the first step of excavation being carried out at a level lower than the fourth step of collecting the non-coherent material.

## Patentansprüche

1. Vorrichtung (10; 100) zum kontinuierlichen Abladen von nichtkohärentem Material; vom geteilten Typ, versehen mit einer horizontalen Baggerfußanordnung (11; 111), die drehbar mit dem unteren Endabschnitt einer eine vertikale Achse aufweisenden Eimerkettenbaggeranordnung (13; 113) drehbar verbunden ist,
wobei die horizontale Baggerfußanordnung (11; 111) mit einer mobilen Baggervorrichtung (19; 119) ausgestattet ist, wobei die Baggervorrichtung in der Lage ist, nichtkohärentes Material aus einem Baggerbereich (22; 122) zu baggern und zu sammeln, und diese zu einem Sammelbereich (28; 128) zu fördern, wobei die mobile Baggervorrichtung in einer derartigen Weise orientiert ist, dass sich ihr Baggerabschnitt (21; 121) in einer in Bezug auf den Baggerbereich (22; 122) angenähert horizontalen Richtung und auf einer geringeren Höhe als der Sammelbereich (28; 128) bewegt; wobei die mobile Baggervorrichtung (19; 119) einen oberen schrägen Abschnitt aufweist,
einen geschlossenen Sammeltrichter (25; 125), der den unteren Endabschnitt (12; 112) der eine vertikale Achse aufweisenden Eimerkettenbaggeranordnung (13; 113) aufnimmt,
**dadurch gekennzeichnet, dass**
die horizontale Baggerfußanordnung (11; 111) durch eine Trägerstruktur (16 116) dargestellt ist, welche durch mehrere Eingrenzungen (17, 18, 117) mit einem Ring (14; 114) verbunden ist, der koaxial um den unteren Endabschnitt (12, 112) der eine vertikale Achse aufweisenden Eimerkettenbaggeranordnung (13; 113) drehbar ist;
und dass
im Wesentlichen horizontal bewegliche Förderelemente (37; 137) und feste Förderelemente (35; 135) für das nichtkohärente Material an der mobilen Baggervorrichtung (19; 119) vorgesehen sind, wobei die Elemente in der Lage sind, das nichtkohärente Material von dem Baggerbereich (22; 122) zu dem geschlossenen Sammeltrichter (25; 125) durch den oberen schrägen Abschnitt der Baggervorrichtung (19; 119) zu bewegen und zu fördern.

2. Vorrichtung (10; 100) zum kontinuierlichen Abladen nach Anspruch 1, **dadurch gekennzeichnet, dass** der geschlossene Sammeltrichter (25; 125) mit der Baggerfußanordnung (11; 111) und mit der mobilen Baggervorrichtung (19; 119) drehbar und fest verbunden ist.

3. Vorrichtung (10; 100) zum kontinuierlichen Abladen nach Anspruch 1, **dadurch gekennzeichnet, dass** die mobile Baggervorrichtung (19; 119) und der Endabschnitt (12; 112) der Eimerkettenbaggeranordnung (13; 113) mit mehreren Begrenzungselementen zum Eingrenzen von Stäuben versehen sind, die durch das nichtkohärente Material in der Nähe des Baggerbereichs (22; 122) und in der Nähe des Sammelbereichs (28; 128) erzeugt werden.

4. Vorrichtung (10; 100) zum kontinuierlichen Abladen nach Anspruch 3, **dadurch gekennzeichnet, dass** die mehreren Begrenzungselemente durch eine Begrenzungstrennwand (38; 38) entsprechend dem oberen schrägen Abschnitt (24; 124) zum Freigeben und Abladen der Baggervorrichtung (19; 119) durch den Trichter (25; 125) und durch eine rohrförmige Begrenzungsstruktur (50; 150) der Baggeranordnung (13; 113) gebildet ist.

5. Vorrichtung (10; 100) zum kontinuierlichen Abladen nach Anspruch 1, **dadurch gekennzeichnet, dass** die mobile Baggervorrichtung (19; 119) an Bord der Trägerstruktur (16; 116) der horizontalen Baggerfußanordnung (11; 111) durch eine doppelte Endloskette (20; 120) gebildet ist, die eine Mehrzahl von Baggereimern (20A; 120A) trägt, wobei die Eimer (20A; 120A) entlang drei Zweigwegen bewegt werden, wobei ein erster erstes Zweig (21; 121) relativ zur Baggerebene (22; 122) horizontal ist; ein zweiter Zweig (23; 123) von der Baggerebene (22; 122) ansteigt, und ein dritter oberer schräger Zweig (24; 124) den ersten Zweig (21; 121) wieder verbindet und ein Bereich zum Freigeben und Abladen der Baggervorrichtung definiert.

6. Vorrichtung (10; 100) zum kontinuierlichen Abladen nach Anspruch 5, **dadurch gekennzeichnet, dass** relativ zu der Trägerstruktur (16; 116) die drei Zweige (21, 23, 24, 121, 123, 124) des Weges der Kette (20; 120) und der Eimer (20A; 120A) definiert sind durch ein erstes Paar von frei beweglichen vorderen Basisrädern (30, 30', 130, 130'), die in einem vorderen Abschnitt der Trägerstruktur (16; 116) aufgenommen sind, durch ein zweites Paar von frei beweglichen hinteren Basisrädern (31, 31', 131, 131'), die in einem hinteren Abschnitt der Trägerstruktur (16; 116) aufgenommen sind, und durch ein drittes Paar von angetriebenen Rädern (33, 33', 133, 133'), die in Bezug auf das erste und das zweite Paar in einer oberen Position platziert sind, wobei das erste Paar (30, 30', 130, 130') und das zweite Paar von Rädern (31, 31', 131, 131') beide auf der gleichen Ebene nächst dem Baggerbereich (22; 122) platziert sind und mit Einstellvorrichtungen (64, 65, 164, 165) zum Regulieren der relativen Position unter den ersten, zweiten und dritten Räderpaaren versehen sind.

7. Vorrichtung (10; 100) zum kontinuierlichen Abladen nach Anspruch 1 und 6, **dadurch gekennzeichnet, dass** die Geometrie der horizontalen Fußanordnung (11; 111) eingestellt werden kann durch Einstellung der relativen Position unter dem ersten (30, 30'; 130, 130'), zweiten (31, 31'; 131, 131') und dritten Paar von Rädern (33, 33'; 133, 133').

8. Vorrichtung (10; 100) zum kontinuierlichen Abladen nach Anspruch 1, **dadurch gekennzeichnet, dass** die an der Trägerstruktur vorgesehenen festen Förderelemente durch einen festen Schlitten (35; 135) gebildet sind; der das nichtkohärente Material zu den horizontal beweglichen Förderelementen fördert, die durch zumindest einer Schnecke (37; 137) aufgebaut sind, die nächst dem festen Schlitten (35; 135) angebracht ist, wobei die zumindest eine Schnecke mit zumindest einer entsprechenden jeweiligen Einlassöffnung (36; 136) des geschlossenen Sammeltrichters (25; 125) verbunden ist.

9. Vorrichtung (10) zum kontinuierlichen Abladen nach Anspruch 8, **dadurch gekennzeichnet, dass** das feste Schlittenelement (35) ein geformter Schlitten ist, der das von den Eimern (20A) getragene Material teilt und zu den beweglichen Förderelementen fördert, die durch ein Paar horizontaler Transportschnecken (37) aufgebaut sind, die mit der Trägerstruktur (16) verbunden sind, die jeweils an einer Seite des Schlittens (35) und zwischen dem Ablade- und Freigabebereich (24A) des nichtkohärenten Materials und dem geschlossenen Sammeltrichter (25), mit dem sie über eine jeweilige Einlassöffnung (36) verbunden sind, angeordnet sind.

10. Vorrichtung (10) zum kontinuierlichen Abladen nach Anspruch 5, **dadurch gekennzeichnet, dass** relativ zu der Trägerstruktur (16) die drei Wegzweige (21, 23, 24) der Kette (20) und der Eimer (20A) definiert sind durch ein erstes Paar von frei beweglichen vorderen Basisrädern (30, 30'), die an einem Ende eines ersten vorderen Arms (72) der Trägerstruktur (16) aufgenommen sind, durch ein zweites Paar von frei beweglichen hinteren Basisrädern (31, 31'), die an einem zweiten hinteren Arm (32) der Trägerstruktur (16) angebracht sind, und durch ein drittes Paar von angetriebenen Rädern (33, 33'), die bevorzugt in einer oberen Position in Bezug auf die ersten und zweiten Räderpaare platziert sind, wobei die ersten (30, 30') und zweiten Räderpaare (31; 31') beide auf derselben Ebene nächst dem Baggerbereich (22) platziert sind und mit Positionseinstellvorrichtungen (64, 65) für die Positionen unter den ersten, zweiten und dritten Räderpaaren versehen sind.

11. Vorrichtung (10; 100) zum kontinuierlichen Abladen nach Anspruch 5, **dadurch gekennzeichnet, dass** relativ zu der Trägerstruktur (116) die drei Zweigwege (121, 123, 124) der Kette (120) und der Eimer (120A) definiert sind durch ein erstes Paar von frei beweglichen vorderen Basisrädern (130, 130'), die in einem vorderen Abschnitt eines Arms (172) aufgenommen sind, der eine variable Neigung relativ zu der Trägerstruktur (116) hat, durch ein zweites Paar von frei beweglichen hinteren Basisrädern
(131, 131'), die in einem hinteren Abschnitt des Arms (172) aufgenommen sind und fest mit dem Arm relativ zu der Trägerstruktur (116) mittels eines Hebels (165) in Zuordnung zu der Neigung des Arms (172) bewegbar sind, und durch ein drittes Paar von angetriebenen Rädern (133, 133'), die bevorzugt in einer oberen Position in Bezug auf das erste und das zweite Räderpaar platziert sind, wobei das erste (130, 130') und das zweite Paar von Rädern (131, 131') beide im Wesentlichen auf derselben Ebene nächst dem Baggerbereich (122) platziert sind und mit Positionseinstellvorrichtungen (164; 165) versehen sind, um die relative Position zwischen den ersten, zweiten und dritten Räderpaaren einzustellen.

12. Vorrichtung (10; 100) zum kontinuierlichen Abladen nach Anspruch 1, **dadurch gekennzeichnet, dass** die horizontale Fußanordnung (11; 111) mit einem unteren Endabschnitt (12; 112) der vertikalen Baggeranordnung mittels eines Drehrings (14; 114) koaxial drehbar verbunden ist, der mit dem rohrförmigen Endabschnitt (15; 115) der Begrenzungsstruktur (50; 150) der Baggeranordnung (13; 113) verbunden ist, um eine 360°-Drehung der Fußanordnung in einer derartigen Weise zu erlauben, um alle nutzbaren Baggerbereiche des Frachtraums (48; 148) in Zuordnung zu der horizontalen und vertikalen Bewegung der Baggeranordnung (13; 113), mit der die Fußanordnung für die Bewegungen fest verbunden ist, zu erreichen.

13. Verfahren zum kontinuierlichen Abladen von nichtkohärentem Material, insbesondere für Schiffsfrachträume oder Speichertanks, durchgeführt mit einer Vorrichtung von einem der vorhergehenden Ansprüche, wobei das Verfahren aufweist, in einer kontinuierlichen Sequenz, den Start eines erst ersten kontinuierlichen Baggerschrittes, währenddessen die Fußanordnung mit dem Sammeln des nichtkohärenten Materials beginnt, gefolgt durch einen zweiten Schritt, in dem das nichtkohärente Material auf ein im Wesentlichen horizontales Transportsystem freigegeben wird, das die im Wesentlichen horizontal beweglichen Förderelemente (37; 137) und festen Förderelemente (35; 135) aufweist, einen dritten Schritt zum Fördern des nichtkohärenten Materials von dem horizontalen Transportsystem zu einem geschlossenen Sammelbereich, einen vierten Schritt zum Sammeln und Liefern des nichtkohärenten Materials von dem geschlossenen Sammelbereich zu der sich vertikal bewegenden Baggeranordnung, die für den Transport des nichtkohärenten Materials, insbesondere von einem Schiffsfrachtraum oder Speichertank zur Außenseite, sorgt, wobei der erste Baggerschritt auf einer tieferen Ebene ausgeführt wird als der vierte Schritt zum Sammeln des nichtkohärenten Materials.

## Revendications

1. Dispositif (10 ; 100) de déchargement continu d'un matériau non cohérent, du type à unités séparées, pourvu d'un ensemble pied d'excavation horizontal (11 ; 111) raccordé de manière à pouvoir tourner à la portion terminale inférieure d'un ensemble élévateur (13 ; 113) à chaîne à godets ayant un axe vertical,
l'ensemble pied d'excavation horizontal (11 ; 111) est équipé d'un dispositif d'excavation (19 ; 119) mobile, le dispositif d'excavation étant capable d'excaver et de collecter un matériau non cohérent d'une zone d'excavation (22 ; 122) et de le transporter vers une zone de collecte (28 ; 128), le dispositif d'excavation mobile étant orienté d'une manière telle que sa portion d'excavation (21 ; 121) se déplace dans un sens sensiblement horizontal par rapport à la zone d'excavation (22 ; 122) et à une hauteur inférieure à la zone de collecte (28 ; 128) ; dans lequel le dispositif d'excavation (19 ; 119) mobile présente une portion oblique supérieure ;
d'une trémie de collecte fermée (25 ; 125) logeant la portion terminale (12 ; 112) inférieure de l'ensemble élévateur (13 ; 113) à chaîne à godets ayant un axe vertical,
**caractérisé en ce que**
l'ensemble pied d'excavation horizontal (11 ; 111) est constitué d'une structure de support (16 ; 116) raccordée par une pluralité de contraintes (17, 18, 117) à un anneau (14 ; 114) pouvant coaxialement tourner autour de la portion terminale (12 ; 112) inférieure de l'ensemble élévateur (13 ; 113) à chaîne à godets ayant un axe vertical,
**et en ce que**
des éléments de transport (37 ; 137) se déplaçant sensiblement horizontalement et des éléments de transport fixes (35 ; 135) pour le matériau non cohérent sont prévus sur ledit dispositif d'excavation (19 ; 119) mobile, lesdits éléments étant capables de déplacer et de transporter ledit matériau non cohérent depuis la zone d'excavation (22 ; 122) vers la trémie de collecte fermée (25 ; 125), à travers la portion oblique supérieure du dispositif d'excavation (19 ; 119).

2. Dispositif (10 ; 100) de déchargement continu selon la revendication 1, **caractérisé en ce que** ladite trémie fermée de collecte (25 ; 125) est raccordée solidement, et de manière à pouvoir tourner, à l'ensemble pied d'excavation (11 ; 111) et au dispositif d'excavation (19 ; 119) mobile.

3. Dispositif (10 ; 100) de déchargement continu selon la revendication 1, **caractérisé en ce que** ledit dispositif d'excavation (19 ; 119) mobile et ladite portion terminale (12 ; 112) de l'ensemble élévateur (13 ; 113) à chaîne à godets sont pourvus d'une pluralité d'éléments de confinement pour contenir les poudres générées par le matériau non cohérent près de la zone d'excavation (22 ; 122) et près de la zone de collecte (28 ; 128).

4. Dispositif (10 ; 100) de déchargement continu selon la revendication 3, **caractérisé en ce que** la pluralité d'éléments de confinement est formée d'une cloison de confinement (38 ; 138) en correspondance de la portion oblique supérieure (24 ; 124) de libération et de déchargement du dispositif d'excavation (19 ; 119), par la trémie (25 ; 125) et par une structure de confinement (50 ; 150) tubulaire de l'ensemble élévateur (13 ; 113).

5. Dispositif (10 ; 100) de déchargement continu selon la revendication 1, **caractérisé en ce que** le dispositif d'excavation (19 ; 119) mobile embarqué sur la structure de support (16 ; 116) dudit ensemble pied d'excavation horizontal (11 ; 111) est formé d'une double chaîne (20 ; 120) sans fin transportant une pluralité de godets d'excavation (20A ; 120A), les godets (20A ; 120A) étant déplacés le long d'un trajet à trois ramifications, une première ramification (21 ; 121) étant horizontale par rapport au niveau d'excavation (22 ; 122), une seconde ramification (23 ; 123) montant depuis le niveau d'excavation (22 ; 122) et une troisième ramification oblique supérieure (24 ; 124) qui ferme le raccordement à la première ramification (21 ; 121) et qui définit la zone de libération et de déchargement du dispositif d'excavation.

6. Dispositif (10 ; 100) de déchargement continu selon la revendication 5, **caractérisé en ce que** par rapport à la structure de support (16 ; 116), les trois ramifications (21, 23, 24 121, 123, 124) du trajet de la chaîne (20 ; 120) et des godets (20A ; 120A) sont définies par un premier couple de roues (30, 30' ; 130, 130') de base avant se déplaçant librement logé dans une portion avant de la structure de support (16 ; 116), par un second couple de roues (31, 31' ; 131, 131') de base arrière, se déplaçant librement, logé dans une portion arrière de ladite structure de support (16 ; 116) et par un troisième couple de roues motorisées (33, 33' ; 133, 133') placé dans une position supérieure par rapport au premier et au second couple, ledit premier couple (30, 30' ; 130, 130') et ledit second couple de roues (31, 31' ; 131, 131') étant tous les deux placés au même niveau près de la zone d'excavation (22 ; 122) et étant pourvus de dispositifs d'ajustement (64, 65 ; 164, 165) pour réguler la position relative parmi lesdits premier, second et troisième couples de roues.

7. Dispositif (10 ; 100) de déchargement continu selon la revendication 1 et 6, **caractérisé en ce que** la géométrie de l'ensemble pied horizontal (11 ; 111) peut être ajustée à l'aide d'un ajustement de la position relative parmi lesdits premier (30, 30' ; 130, 130'), second (31, 31' ; 131, 131') et troisième couples de roues (33, 33' ; 133, 133').

8. Dispositif (10 ; 100) de déchargement continu selon la revendication 1, **caractérisé en ce que** les éléments de transport fixes prévus sur la structure de support sont formés d'une glissière fixe (35 ; 135) qui transporte le matériau non cohérent vers les éléments de transport se déplaçant horizontalement constitués d'au moins une cochlée (37 ; 137) montée près de la glissière fixe (35 ; 135), ladite au moins une cochlée étant raccordée à au moins une ouverture d'entrée respective (36 ; 136) de la trémie de collecte fermée (25 ; 125).

9. Dispositif (10) de déchargement continu selon la revendication 8, **caractérisé en ce que** l'élément coulissant fixe (35) est une glissière mise en forme qui divise et transporte le matériau transporté par les godets (20A) vers les éléments de transport mobiles constitués d'un couple de cochlées de transport (37) horizontalement raccordé à la structure de support (16) chacune localisée sur un côté de la glissière (35) et entre ladite zone de déchargement et de libération du matériau non cohérent et ladite trémie de collecte fermée (25) auxquelles ils sont raccordés par l'intermédiaire de l'ouverture d'entrée respective (36).

10. Dispositif (10) de déchargement continu selon la revendication 5, **caractérisé en ce que** par rapport à la structure de support (16), les trois ramifications de trajet (21, 23, 24) de la chaîne (20) et des godets (20A) sont définies par un premier couple de roues (30, 30') de base avant, se déplaçant librement, logé à une extrémité d'un premier bras avant (72) de la structure de support (16), par un second couple de roues (31, 31') de base arrière, se déplaçant librement, monté sur un second bras arrière (32) de la structure de support (16) et par un troisième couple de roues motorisées (33, 33') placé préférablement dans une position supérieure par rapport au premier et au second couple de roues, lesdits premier (30, 30') et second couple de roues (31, 31') étant tous deux placés au même niveau près de la zone d'excavation (22) et étant pourvus de dispositifs d'ajustement de position (64, 65) pour les positions parmi lesdits premier, second et troisième couples de roues.

11. Dispositif (100) de déchargement continu selon la revendication 5, **caractérisé en ce que** par rapport à la structure de support (116), les trois ramifications de trajet (121, 123, 124) de la chaîne (120) et des godets (120A) sont définies par un premier couple de roues (130, 130') de base avant se déplaçant librement, logées dans une portion avant d'un bras (172) ayant une inclinaison variable par rapport à la structure de support (116), d'un second couple de roues (131, 131') de base arrière, se déplaçant librement, logé dans une portion arrière dudit bras (172) et solidement mobile avec ledit bras par rapport à la structure de support (116) à l'aide d'un levier (165) en association avec l'inclinaison dudit bras (172), et par un troisième couple de roues motorisées (133, 133') placé préférablement dans une position supérieure par rapport au premier et second couple de roues, ledit premier (130, 130') et ledit second couple de roues (131, 131') étant tous deux sensiblement placés au même niveau près de la zone d'excavation (122) et étant pourvus de dispositifs d'ajustement de position (164, 165) afin d'ajuster la position relative parmi lesdits premier, second et troisième couples de roues.

12. Dispositif (10 ; 100) de déchargement continu selon la revendication 1, **caractérisé en ce que** l'ensemble pied horizontal (11 ; 111) est raccordé de manière à pouvoir tourner coaxialement avec une portion terminale (12 ; 112) inférieure de l'ensemble élévateur vertical à l'aide d'un anneau rotatif (14, 114) raccordé à la portion tubulaire d'extrémité (15 ; 115) de la structure de confinement (50 ; 150) de l'ensemble élévateur (13 ; 113), permettant ainsi un degré de rotation de 360° de l'ensemble pied afin d'atteindre toutes les zones d'excavation utiles du maintien (48 ; 148) en association aux mouvements horizontal et vertical de l'ensemble élévateur (13 ; 113) auquel l'ensemble pied est solidement raccordé pour lesdits mouvements.

13. Procédé de déchargement continu d'un matériau non cohérent, particulièrement pour cales de navire ou cuves de stockage, exécuté par un dispositif selon l'une quelconque des revendications précédentes, dans lequel le procédé comprend, en une séquence continue, le début d'une première étape d'excavation continue durant laquelle l'ensemble pied commence à collecter le matériau non cohérent, suivie d'une seconde étape dans laquelle le matériau non cohérent est libéré vers un système de transport sensiblement horizontal ayant lesdits éléments de transport (37 ; 137) se déplaçant sensiblement horizontalement et éléments de transport fixes (35 ; 135), une troisième étape de transport du matériau non cohérent depuis le système de transport horizontal vers une zone de collecte fermée, une quatrième étape de collecte depuis la zone de collecte fermée et de distribution du matériau non cohérent à un ensemble élévateur (13 ; 113) se déplaçant verticalement qui fournit le transport du matériau non cohérent, en particulier depuis la cale de navire ou la cuve de stockage vers l'extérieur ; la première étape d'excavation étant exécutée à un niveau inférieur à la quatrième étape de collecte du matériau non cohérent.
